(19) Europäisches Patentamt / European Patent Office / Office européen des brevets

(11) **EP 2 526 433 B1**

(12) **FASCICULE DE BREVET EUROPEEN**

(45) Date de publication et mention de la délivrance du brevet:
**25.06.2014 Bulletin 2014/26**

(21) Numéro de dépôt: **11700335.0**

(22) Date de dépôt: **10.01.2011**

(51) Int Cl.:
*G01R 31/317* $^{(2006.01)}$   *G06F 21/00* $^{(2013.01)}$

(86) Numéro de dépôt international:
**PCT/EP2011/050234**

(87) Numéro de publication internationale:
**WO 2011/086051 (21.07.2011 Gazette 2011/29)**

(54) **CIRCUIT INTEGRE EN SILICIUM COMPORTANT UNE FONCTION PHYSIQUEMENT NON COPIABLE, PROCEDE ET SYSTEME DE TEST D'UN TEL CIRCUIT**

INTEGRIERTE SILICIUMSCHALTUNG MIT EINER PHYSIKALISCH NICHT REPRODUZIERBAREN FUNKTION SOWIE VERFAHREN UND SYSTEM ZUM TESTEN SOLCH EINER SCHALTUNG

INTEGRATED SILICON CIRCUIT COMPRISING A PHYSICALLY NON-REPRODUCIBLE FUNCTION, AND METHOD AND SYSTEM FOR TESTING SUCH A CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.01.2010 FR 1050297**

(43) Date de publication de la demande:
**28.11.2012 Bulletin 2012/48**

(73) Titulaire: **Institut Telecom - Telecom Paris Tech 75013 Paris (FR)**

(72) Inventeur: **DANGER, Jean-Luc F-92160 Antony (FR)**

(74) Mandataire: **Esselin, Sophie et al Marks & Clerk France Conseils en Propriété Industrielle Immeuble Visium 22, Avenue Aristide Briand 94117 Arcueil Cedex (FR)**

(56) Documents cités:
• **ABHRANIL MAITI ET AL: "Improving the quality of a Physical Unclonable Function using configurable Ring Oscillators", FIELD PROGRAMMABLE LOGIC AND APPLICATIONS, 2009. FPL 2009. INTERNATIONAL CONFERENCE ON, IEEE, PISCATAWAY, NJ, USA, 31 août 2009 (2009-08-31), pages 703-707, XP031534086, ISBN: 978-1-4244-3892-1**

• **EDWARD SUH G ET AL: "Physical Unclonable Functions for Device Authentication and Secret Key Generation", DESIGN AUTOMATION CONFERENCE, 2007. DAC '07. 44TH ACM/IEEE, IEEE, PI, 1 juin 2007 (2007-06-01), pages 9-14, XP031183294, ISBN: 978-1-59593-627-1 cité dans la demande**

• **CHI-EN YIN ET AL: "Temperature-aware cooperative ring oscillator PUF", HARDWARE-ORIENTED SECURITY AND TRUST, 2009. HOST '09. IEEE INTERNATIONAL WORKSHOP ON, IEEE, PISCATAWAY, NJ, USA LNKD- DOI: 10.1109/HST.2009.5225055, 27 juillet 2009 (2009-07-27), pages 36-42, XP031520802, ISBN: 978-1-4244-4805-0**

• **YU H ET AL: "Towards a unique FPGA-based identification circuit using process variations", FIELD PROGRAMMABLE LOGIC AND APPLICATIONS, 2009. FPL 2009. INTERNATIONAL CONFERENCE ON, IEEE, PISCATAWAY, NJ, USA, 31 août 2009 (2009-08-31), pages 397-402, XP031534036, ISBN: 978-1-4244-3892-1**

**EP 2 526 433 B1**

## Description

L'invention concerne un circuit intégré en silicium comportant une fonction physiquement non copiable et un procédé de sélection par test de fiabilité d'un tel circuit. Elle s'applique notamment aux domaines des circuits de cryptographie et de l'authentification de composants électroniques.

Pour de nombreuses applications, il est utile de pouvoir identifier de manière non ambiguë une puce électronique ou un circuit intégré. Des solutions sont proposées dans l'art antérieur permettant notamment de distinguer un circuit donné parmi une série de circuits issus de la même chaine de production. Ainsi, incorporer dans un circuit intégré une fonction physiquement non copiable de type PUF, acronyme venant de l'expression anglo-saxonne « Physically Unclonable Function », permet la génération d'une signature unique propre audit circuit. Cette signature peut être utilisée afin de mettre en place un mécanisme d'authentification de système électronique.

Cette signature unique peut aussi être utilisée comme clé de chiffrement unique propre au circuit. Dans ce cas, la mémorisation de la clé au sein du circuit intégré n'est pas requise.

Les signatures sont générées directement par les circuits. L'intervention humaine n'étant pas requise, la résistance aux attaques, notamment de type attaque par observation, est améliorée.

Il existe dans l'état de la technique différentes manières de mettre en oeuvre des fonctions PUF. Ainsi, l'article de R. Pappu intitulé Physical One-Way Functions, PhD Thesis, Massachussetts Institute of Technology, Mars 2001, décrit ce qu'est une PUF optique. Les PUF optiques sont composées d'un matériau transparent comportant des particules dispersées aléatoirement permettant la déviation de la lumière laser.

Des PUF en couche, désignées par l'expression anglo-saxonne « coating PUF » sont également utilisées. Ce type de PUF est décrit dans l'article de P. Tuyls, B. Skoric et T. Kevenaar intitulé Security with Noisy Data: Private Biometrics, Secure Key Storage and Anti-Counterfeiting, Secaucus, NJ USA: Springer-Verlag New York, 2007. Dans ce cas, un matériau opaque est dopé aléatoirement avec des particules diélectriques et est positionné au dessus du circuit intégré.

Une famille de PUFs appelées PUF silicium utilise les incohérences structurelles introduites par les procédés de fabrication des circuits intégrés. La différence de dispersion entre les fils et les transistors constitutifs desdits circuits est en effet significative d'un circuit à un autre, même s'ils font partie de la même tranche. Cette famille comprend notamment les PUF arbitres, les PUF à oscillateur en anneau et les SRAM PUF. Les PUF silicium peuvent être mis en oeuvre dans des circuits ASIC ou FPGA sans aucune modification technologique.

Les PUF arbitres sont décrites dans l'article de B. Gassend, D. E. Clarke, M. van Dijk, et S. Devadas, intitulé Silicon physical random functions, ACM Conference on Computer and Communications Security, 2002, pages 148-160. Dans ce type de PUF, un même signal se propage en empruntant deux chemins d'un circuit de retard, les deux circuits étant distincts et pouvant être configurés à l'aide de mots de contrôle. Un arbitre compare le retard entre les deux signaux résultant de ces deux propagations, et le résultat de cette comparaison aboutit à la signature du circuit intégré. Un des inconvénients de ce type de PUF est que les éléments permettant le paramétrage des chemins doivent être équilibrés en termes de retards, ce qui rend leur conception difficile.

Les PUF à paires d'oscillateurs en anneau sont aussi des PUF silicium. Elles sont décrites dans l'article de G. E. Suh et S. Devadas intitulé Physical unclonable functions for device authentication and secret key generation, DAC, 2007, pages 9-14. Les fréquences générées par une paire d'oscillateurs en anneau identiques sont comparées. Le résultat de cette comparaison aboutit à la signature du circuit intégré. Un inconvénient des oscillateurs en anneau est que lesdits oscillateurs sont sensibles aux effets dits de deuxième ordre comme par exemple les effets liés au couplage mutuel entre les oscillateurs ou aux perturbations introduites sur un oscillateur lors d'une attaque.

Un but de l'invention est notamment de pallier les inconvénients précités.

A cet effet l'invention a pour objet un circuit intégré en silicium comportant une fonction physiquement non copiable LPUF permettant la génération d'une signature propre audit circuit. Ladite fonction comporte un oscillateur en anneau composé d'une boucle parcourue par un signal e, ladite boucle étant formée de N chaînes de délais topologiquement identiques, connectées en série les unes aux autres et d'une porte d'inversion, une chaîne de délais étant composée de M éléments de retard connectés en série les uns aux autres. Elle comporte également un module de contrôle générant N mots de contrôle, lesdits mots étant utilisés pour configurer la valeur des retards introduits par les chaines de délais sur le signal e les parcourant. Elle comporte aussi un module de mesure mesurant la fréquence du signal en sortie de la dernière chaine de délais après la mise à jour des mots de contrôle. Elle comprend également des moyens pour déduire des mesures de fréquence les bits composant la signature du circuit.

Le circuit est, par exemple un circuit ASIC ou un FPGA.

Selon un mode de réalisation, la signature est utilisée comme clé de chiffrement.

Selon un autre mode de réalisation, la signature est utilisée pour son authentification.

Les éléments de retard comportent, par exemple, des moyens pour aiguiller le signal les parcourant selon aux moins deux chemins distincts, un chemin introduisant une valeur de retard lui étant propre, l'aiguillage étant contrôlé par au moins un bit appartenant à un mot de contrôle.

Selon, un aspect de l'invention, des mots de défi composés d'une concaténation de mots de contrôle sont présentés en entrée du module de contrôle, ledit module générant des combinaisons à partir desdits mots afin de configurer les chaines de délais.

Les bits de la signature sont, par exemple, déterminés en fonction du classement des fréquences mesurées pour les différentes combinaisons des mots de contrôle.

Les bits de la signature sont déterminés, par exemple, en fonction des différences estimées entre deux valeurs de fréquence mesurées, une valeur de fréquence mesurée correspondant à une combinaison de mots de contrôle.

Les bits de la signature sont, par exemple, déterminés en fonction de la valeur du rapport entre deux différences de fréquence estimées.

Dans un mode de réalisation, le circuit comporte un générateur de nombres aléatoires, les nombres générés étant utilisés afin de sélectionner l'ordre dans lequel les fréquences correspondant aux combinaisons des mots de contrôles sont mesurées.

Le circuit comprend, par exemple, au moins un bit de parité, un tel bit étant utilisé pour corriger un bit de la signature généré avec une erreur.

L'invention a aussi pour objet un procédé de test de circuits intégrés comportant une fonction physiquement non copiable LPUF. Une succession d'étapes est appliquée aux circuits testés de manière à sélectionner les circuits permettant de générer une signature propre audit circuit avec un niveau de fiabilité choisi, ces étapes correspondant à une sélection des paramètres T et Th de configuration du test ainsi que de B combinaisons de mots de contrôle ayant une distance de Hamming au moins égale à une valeur prédéfinie HD, puis à une phase de mesures durant laquelle des quantités représentatives des bits de signature du circuit sont mesurées, jusqu'à T mesures étant effectuées par bit de signature, ces T mesures étant accumulées de manière à décider si le bit correspondant est indéterminé, la décision étant prise après comparaison avec au moins une valeur déduite de la valeur du paramètre Th, les circuits testés étant sélectionnés en fonction du nombre de bits indéterminés détectés.

Selon un mode de mise en oeuvre, le procédé comporte une étape de détermination de la probabilité pour qu'un circuit ne soit pas sélectionné, ladite probabilité étant déterminée en utilisant l'expression :

$$P_{rej} = 1 - \left[ 1 - erf\left( \frac{Th}{\sigma \times \sqrt{2 \times HD}} \right) \right]^{B}$$

dans laquelle :

  erf() est la fonction d'erreur de Gauss ;
  $\sigma$ est la variance des mesures des quantités représentatives des bits de signature du circuit.

Selon un autre mode de mise en oeuvre, le procédé comporte une étape de détermination de la probabilité d'erreur par bit de signature, ladite probabilité étant déterminée en utilisant l'expression :

$$P_{e,j} = \frac{1}{2}\left( 1 - erf\left( \frac{\sqrt{T} \times \delta_j}{s\sqrt{2}} \right) \right)$$

dans laquelle :

  $\delta_j$ est une différence de fréquence mesurée entre deux fréquences correspondant à l'application de deux combinaisons de mots de contrôle distinctes ;
  s est définie telle que $s^2$ est la variance du bruit de mesure.

Un circuit est sélectionné, par exemple, si aucun bit de la signature n'est indéterminé.

Lorsque la fonction LPUF d'un circuit testé est associée à un bit de parité dont la valeur est déterminée à partir de la signature dudit circuit, ledit circuit est sélectionné, par exemple, si le nombre de bit indéterminé est strictement inférieur à 2.

Les valeurs de $s^2$ et de $\sigma^2$ sont mesurées, par exemple, pour une température sensiblement égale à +70°C et une tension d'alimentation des circuits sensiblement inférieure de 5% par rapport à la tension d'alimentation nominale, la phase de mesures étant conduite dans les mêmes conditions.

L'invention a aussi pour objet un système de test mettant en oeuvre le procédé selon l'invention. Le système est composé d'un calculateur muni d'une interface utilisateur, d'un équipement permettant de contrôler des sondes de mesure, lesdites sondes ayant pour fonction de collecter les mesures des quantités représentatives des bits de signature produites par les circuits testés, les traitements associés à cette phase étant ensuite effectués par le calculateur et affichés sur son interface.

D'autres caractéristiques et avantages de l'invention apparaîtront à l'aide de la description qui suit donnée à titre illustratif et non limitatif, faite en regard des dessins annexés parmi lesquels :

- la figure 1 donne un exemple de PUF arbitre ;
- la figure 2 présente un élément de retard pouvant être utilisé dans une PUF arbitre ;
- la figure 3 donne un exemple de PUF silicium selon l'invention comprenant une structure en boucle ;
- la figure 4 donne un exemple d'éléments de retard pouvant être utilisés dans une chaine de délais comprise dans une LPUF ;
- la figure 5 présente une LPUF comprenant N = 2 chaînes de délais ;
- la figure 6 donne un exemple de méthode de combinaison des mots de contrôle utilisés dans une LPUF ;
- la figure 7 donne un exemple de fonction d'erreur permettant d'estimer la fiabilité des LPUF ;
- la figure 8 illustre le principe de la détection de bits défectueux dans une LPUF ;
- la figure 9 donne un exemple de combinaisons de mot de contrôle et de comparaison des mesures de fréquence leurs étant associées permettant réduire le taux de réjection de circuit comportant une LPUF ;
- la figure 10 donne un exemple du procédé de test de circuits selon l'invention ;
- la figure 11 donne un exemple de système de test mettant en oeuvre le procédé de test selon l'invention.

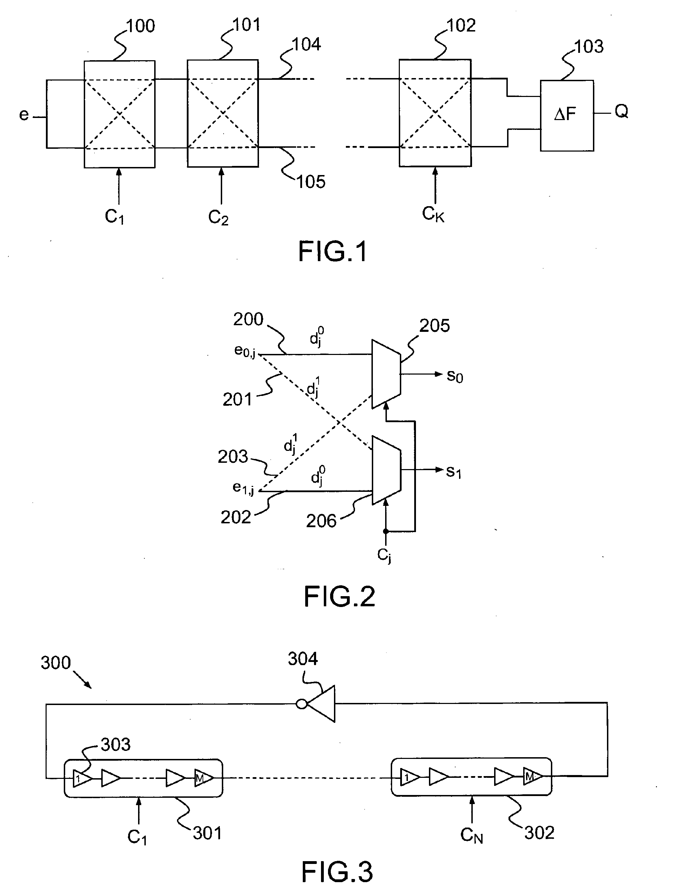

Le figure 1 donne un exemple de PUF arbitre. Une PUF arbitre est habituellement composée d'une chaine de K éléments de retard 100, 101, 102 connectés en série les uns aux autres et d'un élément arbitre 103 connecté au dernier élément de retard de ladite chaine. Un signal e est introduit dans la PUF et parcours deux chemins électroniques différents 104, 105. Les éléments de retard 100, 101, 102 peuvent être configurés à l'aide d'un mot binaire de contrôle de K bits $C_1$, $C_2$, ..., $C_K$. A un mot de K bits correspond une configuration pour chacun des deux chemins 104, 105. Cette configuration est unique pour un mot binaire de contrôle donné, chacun des bits dudit mot étant utilisé pour configurer un des éléments de retard 100, 101, 102, un élément de retard aillant une fonction d'aiguillage et participant à la définition des deux chemins uniques associés à un mot de contrôle.

L'élément arbitre 103 compare les retards introduits par ces deux chemins 104, 105 entre les deux signaux issus de e, le résultat de cette comparaison aboutissant à un bit Q. En modifiant le mot de contrôle, un autre bit Q est généré. Il est ainsi possible de générer ainsi des mots binaires utilisés comme signature du circuit dans lequel la PUF arbitre est mise en oeuvre.

La figure 2 présente un élément de retard pouvant être utilisé dans une PUF arbitre. Cet élément de retard est par exemple le j-ième élément d'une chaine de K éléments. En entrée de cet élément de retard, deux signaux $e_{0,j}$ et $e_{1,j}$ sont présentés. La sortie dudit élément correspond à deux signaux $s_0$ et $s_1$.

Les signaux d'entrée sont aiguillés en fonction de la valeur que prend le bit de contrôle $C_j$, ledit bit contrôlant deux portes 205, 206 permettant cet aiguillage.

Par exemple, le signal $e_{0,j}$ peut emprunter soit un premier chemin 200 si $C_j = 0$ soit un second chemin 201 si $C_j = 1$. Dans le premier cas, le signal de sortie s0 correspond au signal d'entrée $e_{0,j}$ affecté du retard $d_0^j$ associé au premier chemin 200 et dans le second cas, le signal de sortie s1 correspond au signal d'entrée $e_{0,j}$ affecté du retard $d_1^j$ associé au second chemin 201.

Pour ce qui est du signal $e_{1,j}$, celui-ci empruntera alors soit un premier chemin 202 si $C_j = 0$ soit un second chemin 203 si $C_j = 1$. Dans le premier cas, le signal de sortie s1 correspond au signal d'entrée $e_{1,j}$ affecté du retard $d_0^j$ associé au premier chemin 202 et dans le second cas, le signal de sortie s1 correspond au signal d'entrée $e_{1,j}$ affecté du retard $d_1^j$ associé au second chemin 203.

De manière à ce que ces éléments de retard permettent la mise en oeuvre d'une PUF arbitre, il est nécessaire que les chemins internes auxdits éléments soient équilibrés, c'est-à-dire que les chemins parallèles (200, 202) soient identiques et les chemins croisés (201, 203) soient identiques. Cet équilibrage est d'autant plus complexe que les chemins peuvent se croiser au niveau de chaque élément de retard. La mise en oeuvre des PUF arbitres est donc complexe.

La figure 3 donne un exemple de PUF silicium selon l'invention comprenant une structure en boucle. La PUF silicium de cet exemple est désignée dans la suite de la description par l'acronyme LPUF venant de l'expression anglo-saxonne « Loop Physically Unclonable Function ».

Une LPUF est une PUF silicium comportant une boucle 300 formée de N chaînes de délais 301, 302, N étant au moins égal à 2. Cette boucle forme un oscillateur en anneau simple.

Une chaîne de délais 301, 302 est composée de M éléments de retard 303. À la différence d'une PUF à oscillateur en anneau, l'oscillateur de la LPUF comporte un unique oscillateur.

Un des avantages de la structure d'une LPUF est que le bruit est commun à toutes les chaînes de retard. De plus, il n'y a pas de problème de couplage mutuel entre oscillateurs, car il n'y a qu'une seule boucle.

Chaque chaîne de retard 301, 302 reçoit un mot de contrôle Ci de M bits, un mot correspondant à une valeur de retard propre au circuit.

Un bit $C_{i,j}$ d'un mot de contrôle $C_i$ correspond à une valeur de délai de l'élément de retard numéro j parmi les M éléments de la chaine de délais i.

Lors de la conception d'une LPUF et plus particulièrement lors du placement-routage consistant à transformer les portes logiques et leurs interconnexions en portes à transistors et en fils réels, la chaine de délais est dupliquée N fois d'une façon rigoureusement identique. Cette duplication peut être mise en oeuvre facilement, que ce soit dans le cadre de la conception de circuits ASIC ou de circuit FPGA. Il en résulte qu'une LPUF est particulièrement simple à concevoir.

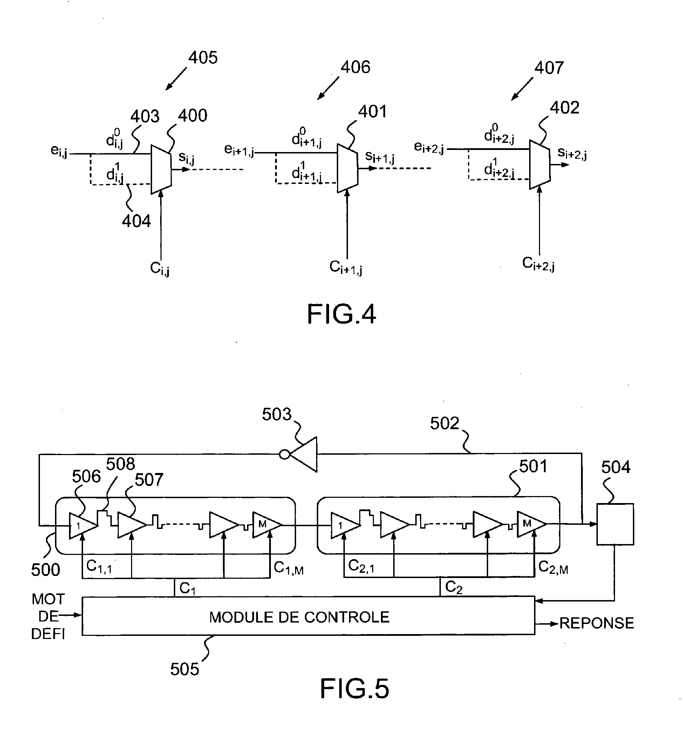

La figure 4 donne un exemple d'éléments de retard pouvant être utilisés dans une chaine de délais comprise dans une LPUF.

Un signal d'entrée $e_{i,j}$ est introduit dans l'élément de retard 405. Ledit signal peut se propager en empruntant deux chemins distincts 403, 404. Le choix du chemin dépend de la valeur du bit de contrôle $C_{i,j}$ associé à l'élément de contrôle, ledit bit ayant pour but de sélectionner un des deux chemins 403 ou 404 à l'aide d'un multiplexeur 400. Les indices i et j indiquent respectivement l'indice de chaîne et l'indice de l'élément dans la chaîne.

A titre d'exemple, si $C_{i,j} = 0$, le signal d'entrée $e_{i,j}$ empruntera un premier chemin 403 et la sortie du premier élément de retard correspondra au signal $e_{i,j}$ affecté d'un retard $d_{i,j}^0$, ledit retard résultant de la propagation du signal le long de ce premier chemin. Au contraire, si $C_{i,j} = 1$, le signal d'entrée $e_{i,j}$ empruntera un second chemin 404 et la sortie du premier élément de retard correspondra au signal $e_{i,j}$ affecté d'un retard $d_{i,j}^1$, ledit retard résultant de la propagation du signal le long de ce second chemin.

Avantageusement, il n'est pas nécessaire de réaliser un équilibrage entre les différents chemins d'un élément de retard 403, 404 car il suffit de dupliquer les éléments de retard pour avoir des clones 406, 407 de l'élément original 405 correspondant au jème élément au sein d'une même chaîne. L'équilibre est donc plus facile à garantir que dans une PUF arbitre car les différents chemins d'un élément de retard ne se croisent pas.

Les éléments de retard n'ont pas les mêmes caractéristiques physiques d'une chaîne à l'autre et introduisent ainsi des retards différents que la LPUF peut exploiter.

La figure 5 présente une LPUF comprenant N = 2 chaînes de délais. Les deux chaines de délais 500, 501 comprennent chacune M éléments de retard. Ces chaines de délais sont identiques topologiquement, c'est-à-dire fonctionnellement, et ont la même structure physique. Les éléments de retard 506, 507 ainsi que leur interconnexion 508 se retrouvent à l'identique dans la seconde chaîne de délais 501. Les chaînes sont reliées en série l'une à l'autre et la sortie de la seconde est bouclée sur l'entrée de la première à l'aide d'une ligne de boucle 502. Une porte logique 503 réalisant une fonction d'inversion est placée sur ladite boucle 502. Cet ensemble bouclé constitue un oscillateur configurable.

Les deux éléments de retard 500, 501 sont contrôlés respectivement par deux mots binaires $C_1$ et $C_2$.

$C_1$ et $C_2$ sont composés chacun de M bits notés respectivement $C_{1,1}$, $C_{1,2}$, ..., $C_{1,M}$ et $C_{2,1}$, $C_{2,2}$, ..., $C_{2,M}$. Ces deux mots sont générés par un module de contrôle 505.

La fréquence du signal de sortie de la dernière chaine de délais est analysée par un module de mesure 504. La valeur de fréquence mesurée dépend des retards introduits par les différentes chaines de délais, et donc des mots de contrôle leur étant appliqués. Le module de contrôle 505 applique, par exemple, successivement une première valeur de couple $(C_1, C_2) = (0, 2^j)$, c'est-à-dire que $C_{2,j} = 1$ ($j \in [1 ; M]$) et que les autres bits de $C_1$ et $C_2$ sont égaux à zéro, puis une seconde valeur de couple $(C_1, C_2) = (2^j, 0)$.

Le module de mesure 504 mesure successivement les fréquences des signaux correspondant à l'application des deux valeurs de couple $(C_1, C_2)$, lesdites mesures étant notées respectivement $\text{freq}(0, 2^j)$ et $\text{freq}(2^j, 0)$. De ces mesures sont déduites des quantités représentatives des bits de la signature. Par exemple, une différence de fréquence $\delta_j$ est ensuite estimée par le module de contrôle 505 en utilisant l'expression suivante :

$$\delta_j = \text{freq}\left(0, 2^j\right) - \text{freq}\left(2^j, 0\right) \qquad (1)$$

La différence de délais de propagation dans les chaines de délais, conséquence de l'application des deux valeurs du couple $(C_1, C_2)$ modifiant le chemin emprunté par le signal, n'est pas nulle et peut être exploitée. En effet, cette différence de délais impacte la différence en fréquence mesurée $\delta_j$, cette dernière pouvant être par conséquent utilisée notamment pour la génération des bits de la signature propre au circuit.

Ainsi, une convention peut être choisie de manière à générer les bits de la signature à partir des quantités

représentatives $\delta_j$ des bits de la signature. Par exemple, si N = 2, le bit i est égal à 0 si $\delta_j$ est positif et égal à 1 si $\delta_j$ est négatif.

Afin de générer les différents bits de la signature, des mots binaires appelés dans la suite de la description « mots de défi » sont présentés en entrée de la LPUF et traités par le module de contrôle 505. Le module de contrôle 505 génère sur cette base des combinaisons de mots de contrôle utilisés pour configurer les chaines de délais et pour que des différences de fréquence puissent être mesurées. En effet, un mot de défi est composé de N mots de contrôle. Ces mots de contrôle peuvent être combinés de manière différentes selon N! combinaisons de contrôle possibles des N mots $C_i$, le point d'exclamation représentant l'opération factorielle, afin d'obtenir autant de configurations possibles des chaines de délais. Une réponse est alors déterminée, par exemple par le module de contrôle. Pour N=2, un exemple de réponse correspondant à la signature du circuit peut être exprimé en fonction de la différence de fréquence mentionnée précédemment. Si N>2, une réponse peut être déterminée, par exemple, en fonction de l'ordre des fréquences pour les N ! combinaisons de contrôle possibles.

Dans le but de comparer et de trier les fréquences obtenues pour différentes combinaisons de contrôle et donc de délais, il est nécessaire qu'il y ait au moins deux combinaisons de mots $C_i$ différentes. Si on considère la distance de Hamming totale HD de la combinaison de mots $C_i$, HD s'exprime en utilisant l'expression :

$$HD = \sum_{i=1,i'>i}^{i=N} HW\left(C_i \oplus C_{i'}\right) \quad i,i' \in [1,N] \qquad (2)$$

dans laquelle :

HW() est une fonction déterminant le poids de Hamming ;
$\oplus$ représente l'opération logique OU exclusif.

Si $((C_1, C_{i'})$ sont deux mots de contrôle établis à partir d'une combinaison de mots agissant sur N chaînes, la condition exprimée par l'expression suivante doit être préférablement vérifiée pour être sûr d'avoir au moins deux combinaisons différentes :

$$\forall i,i' \in [1,N] \quad HD \geq 1 \qquad (3)$$

De plus, le $j^{\text{ème}}$ bit des N chaînes de délais ne doit pas rester à la valeur '1', sinon aucune différence de bits ne peut être détectée par le contrôleur. Le $j^{\text{ème}}$ bit peut être toujours égal à '0' par convention. Par exemple, si N=2 et M=3, la différence $\delta_j$ obtenue pour la valeur de couple $(C_1, C_2) = (0, 1)$ est la même que pour les valeurs de couple $(C_1, C_2) = (2, 3)$, $(C_1, C_2) = (4, 5)$ et $(C_1, C_2) = (6, 7)$, En d'autres termes, l'expression suivante doit être vérifiée :

$$\forall j \in [1,M] \qquad \prod_{i=1}^{N}(C_{i,j}) = 0 \qquad (4)$$

Une LPUF peut aussi inclure un mécanisme de protection contre les attaques par observation ou par injection de faute. Pour cela, un générateur de nombres aléatoires peut être intégré dans le circuit. Celui-ci peut être utilisé pour sélectionner l'ordre dans lequel les fréquences sont mesurées. Ainsi l'attaquant ne peut ni forcer une valeur de bit ni connaître la valeur d'un bit car la mesure des fréquences se fait dans une séquence aléatoire des mots de contrôle.

Avantageusement, une LPUF est résistante aux bruits et interférences liés à l'environnement. En effet, le bruit de perturbation, affecte de manière identique les chaines de délais composant la LPUF. Le résultat des mesures de fréquence est donc peu affecté par ce bruit s'il est de durée supérieure à la mesure, et par conséquent, la génération de la signature reste fiable, ce qui peut ne pas être le cas pour les PUF à paires d'oscillateurs en anneau.

Pour une application visant à l'authentification d'un circuit, une LPUF peut être utilisée avec un mécanisme CRP, acronyme venant de l'expression anglo-saxonne « Challenge-Response Pair ».

Ce mécanisme peut être mis en oeuvre en intégrant une LPUF audit circuit. Un message ou mot de défi (« challenge » en anglais) est présenté à ladite LPUF et celle-ci détermine ensuite un message de réponse permettant d'authentifier le circuit. En effet, ce message de réponse correspond à une signature générée par la PUF et est propre audit circuit.

Une LPUF peut aussi être utilisée pour la génération de clé de chiffrement. Pour cela, la LPUF utilise d'elle-même un sous ensemble de message de défis et la signature ainsi générée peut être utilisée comme clé de chiffrement.

Un mot de défi correspond à la concaténation de N mots de contrôle $C_i$ ($i \in [1, ..., N]$), un mot de contrôle étant utilisé pour chacune des N chaînes de délais. Le mot de réponse est le résultat des mesures et des comparaisons de fréquence résultant des N! combinaisons possibles des N mots $C_i$, le point d'exclamation représentant l'opération factorielle. De façon à avoir N ! combinaisons différentes il est possible de rajouter aux conditions (3) et (4) le fait que tous les mots de contrôles $C_i$ sont différents. Ceci peut s'exprimer par :

$$i, i' \in [1, N] \quad \prod_{i \neq i} (C_i \oplus C_{i'}) \geq 1 \qquad (5)$$

Les fréquences mesurées sont comparées les unes aux autres de manière à former une réponse conforme à un protocole donné. Par exemple les N! combinaisons peuvent être triées différemment pour obtenir (N!)! arrangements.

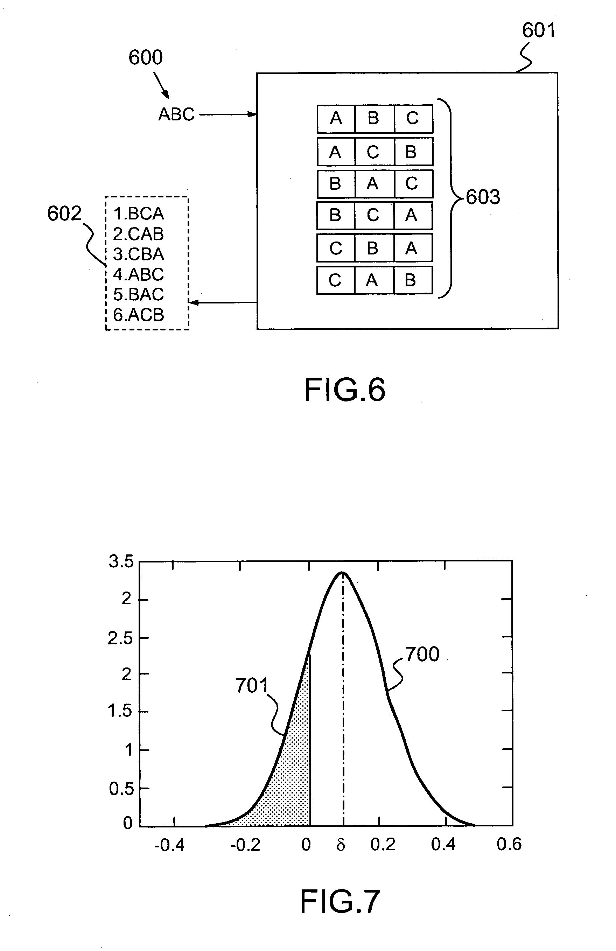

La figure 6 donne un exemple de méthode de combinaison des mots de contrôle utilisés dans une LPUF. Dans cet exemple N=3 et les mots de contrôle $C_i$ peuvent prendre trois valeurs A, B et C 600 respectant les conditions (3),(4)et (5). Ainsi, 6 combinaisons possibles 603 peuvent être générées pour les mots de contrôle (C1, C2, C3) et 720 arrangements de fréquence peuvent être obtenus.

Avantageusement, le nombre de mots de défis possibles est significativement plus important que pour une PUF arbitre. En effet, pour une PUF arbitre celui-ci vaut $2^M$. Pour une LPUF, et en tenant compte des expressions (3), (4) et (5), le nombre de mots de défis possibles est donné par la tableau (1) suivante pour certaines valeurs de N et M :

Tableau (1) : Nombre de mots de défis possibles

| | M | | | | | | | | | |
|---|---|---|---|---|---|---|---|---|---|---|
| | 2 | 3 | 4 | 5 | 6 | 7 | 8 | 10 | 12 | 16 |
| Arbitre | 4 | 8 | 16 | 32 | 64 | 128 | 256 | 1K | 4K | 64K |
| LPUF N=2 | 4 | 13 | 40 | 121 | 364 | 1093 | 3280 | 29524 | ~250K | ~21M |
| LPUF N=3 | 4 | 44 | 360 | 2680 | 19244 | ~130K | ~1M | ~45M | ~2G | ~5000G |

Avantageusement, le nombre de signatures différentes pouvant être générées est donc très élevé pour une LPUF en comparaison avec une PUF arbitre.

Pour une application visant à générer une clé de chiffrement intrinsèque au composant sur lequel est implémenté la LPUF, une méthode consiste à utiliser des mots de contrôles prédéfinis, c'est-à-dire des mots de contrôle mémorisés par le circuit. Le principe est le même que l'authentification à la différence qu'il n'y a pas d'envoi de mots de défis, c'est à la LPUF de considérer un sous-ensemble de mots de défi sur lesquels les fréquences des combinaisons sont mesurées et comparées..

Afin d'illustrer le principe de cette méthode nous considérons un module de contrôle de la LPUF utilisant des mots de contrôle $C_i$ identiques dont les bits sont forcés à zéro, sauf pour un mot de contrôle dont l'un des bits prend la valeur 1. La valeur associée à ce mot de contrôle est $2^j$, j désignant le j-ème élément de retard utilisé pour générer un bit de la clé. Le module de contrôle de la LPUF génère ensuite N! combinaisons en appliquant une permutation sur les N mots de contrôle $C_i$. Comme dans cet exemple tous les mots de contrôles sont identiques (zéro) à part un, le nombre de combinaison est égal à N et non N!. Les N fréquences correspondant à ces N combinaisons sont obtenus par mesures.

Une valeur de fréquence mesurée correspond à une combinaison de mots de contrôle ($C_1$ ..., $C_N$), ladite valeur étant notée freq($C_1$,..., $C_N$). Ainsi, les N fréquences $f_1$, $f_2$, ..., $f_N$ correspondant aux N combinaisons mentionnées ci-dessus et peuvent s'écrire de la manière suivante :

$$f_1 = \text{freq}(0,0,...,2^j)$$

$$...$$

$$f_{N-1} = \text{freq}(0,2^j,...,0)$$

$$f_N = \text{freq}(2^j,0,...,0)$$

Ces fréquences mesurées sont triées, par exemple, de manière à ce qu'à une différence ou une combinaison de fréquences mesurées corresponde un bit de la signature à générer.

A titre d'exemple, si N=2, une différence de fréquences $\delta_i$ permet d'obtenir le j-ième bit de la clé de chiffrement, ladite différence pouvant être déterminée en utilisant l'expression (1).

Dans le cas où N=3, il y a 3 valeurs de fréquences possibles et par conséquent six combinaisons possibles. Les trois valeurs sont :

$$f_1 = \mathrm{freq}\left(0,0,2^j\right)$$

$$f_2 = \mathrm{freq}\left(0,2^j,0\right)$$

$$f_3 = \mathrm{freq}\left(2^j,0,0\right)$$

Les bits de la clé de chiffrement peuvent ensuite être déduits à l'aide d'un tableau dont un exemple est donné ci-dessous :

Tableau (2) : exemple de correspondance entre fréquences mesurées et bits de la signature

| Combinaison de fréquences mesurées | | | Bit de la clé |
|---|---|---|---|
| $f_1$ | $f_2$ | $f_3$ | 1 |
| $f_1$ | $f_3$ | $f_2$ | 1 |
| $f_2$ | $f_3$ | $f_1$ | 0 |
| $f_3$ | $f_2$ | $f_1$ | 0 |
| $f_3$ | $f_1$ | $f_2$ | 0 |
| $f_2$ | $f_1$ | $f_3$ | 1 |

Cette même méthode peut s'appliquer en utilisant des mots de défi prédéfinis pour obtenir la signature. Le nombre de mots de défi est lié au nombre de bits pouvant être extraits pour constituer une clé de chiffrement ou un mot de réponse utilisé pour authentifier le circuit comportant la LPUF.

Par exemple, si N=2 et M=5, en tenant compte du tableau (1), il est possible d'obtenir 121 bits différents.

Si N est supérieur à 2, le nombre de bits pouvant être obtenu augmente rapidement car il existe (N!)! arrangements possibles, comme explicité précédemment dans la description.

Le nombre maximum de bits composant la signature est égal au nombre de mots de défi possibles multiplié par le logarithme en base 2 de (N !) !. Le tableau (1) montre qu'il existe un nombre très important de mots de défi et donc de bits de signature. Ceux-ci peuvent cependant être redondant car des mots de défi peuvent partager les mêmes combinaisons de bits, par exemple si N=3, le mot de défi M1 =(0,1,2) est proche du mot de défi M2=(0,1,3). Cette redondance reste faible en choisissant des combinaisons de mots de contrôle ayant des distances très grandes entre elles. Ainsi ce choix peut être par exemple réalisé en respectant une contrainte de distance telle que la distance de Hamming entre un mot de défi et les N! combinaisons des autres mots ne soit pas inférieure à une valeur minimum. Dans l'exemple précédent, la distance entre M1 et M2 est de HW[(0,1,2) ⊕ (0,1,3)] = 1. Si la valeur minimum choisie est de 2, l'un de ces mots de défi sera rejeté.

Le circuit LPUF peut comporter un bit de parité. En effet, notamment à cause des caractéristiques physiques du circuit après fabrication, l'un des bits de la signature peut être généré de manière erronée.

Le bit de parité est calculé par le circuit sur l'ensemble des bits de la signature. Une convention pouvant être utilisée est de positionner le bit de parité à '0' si le nombre de bits de signature à '1' test pair.

Une mémoire non volatile peut être utilisée pour sauvegarder ce bit. Si un circuit FPGA est utilisé, il suffit d'avoir 2 fichiers de configuration propres à <u>chaque valeur du bit de parité.</u>

Afin de réduire la probabilité de générer un bit de signature erroné, plusieurs mesures des quantités représentatives des bits de signature, appelées également essais, peuvent être effectuées successivement par le module de mesure de la LPUF pour une combinaison de contrôle donnée. Les valeurs obtenues grâce à ces essais sont ensuite accumulées et le signe du résultat accumulé donne le bit de signature.

Lorsqu'un bit de parité est associé au fonctionnement de la LPUF, le bit le moins fiable peut être détecté aisément durant le traitement correspondant aux essais..

Ce bit peut alors être corrigé aisément en l'inversant s'il s'avère que la parité n'est pas respectée.

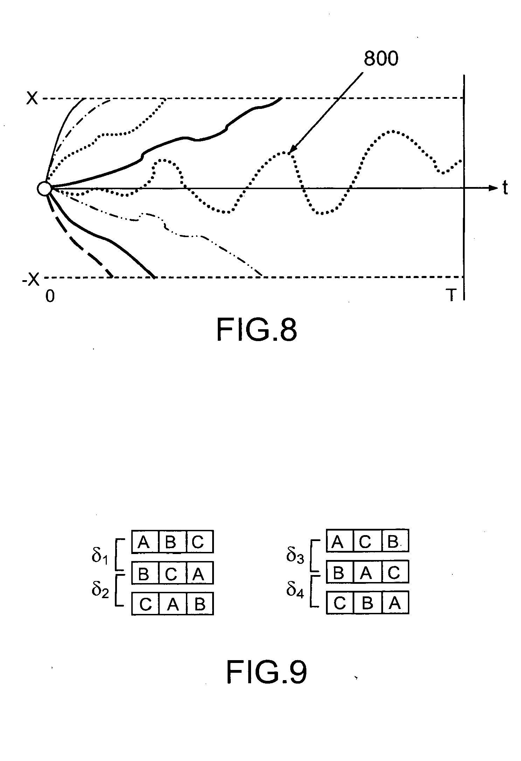

Ce principe est illustré à l'aide de la figure 8, l'une des courbes 800 correspond au bit le moins fiable, les autres courbes correspondant à des bits plus fiables de la signature. Comme explicité précédemment, une fois la mesure terminée, le bit non fiable peut être corrigé si la parité n'est pas respectée.

Les caractéristiques des LPUF peuvent être utilisées afin de mettre en oeuvre un procédé permettant de tester et/ou de sélectionner les circuits intégrés ayant une probabilité négligeable de générer une signature erronée. Ainsi ce procédé permet d'augmenter la fiabilité d'utilisation des LPUF car il permet notamment d'écarter les circuits non fiables ainsi que de les classer par niveau de fiabilité, un circuit ayant un niveau de fiabilité donné pouvant être utilisé pour une famille d'applications donnée. Ce procédé peut être par exemple être appliqué à la fin du processus de fabrication des circuits, afin de ne garder que les circuits les plus fiables.

Avantageusement, cette possibilité de sélectionner les circuits permet de s'affranchir de l'implémentation d'un code correcteur d'erreur.

Le procédé a notamment pour objectif d'écarter les circuits ayant une probabilité de générer une signature erronée supérieure à une valeur donnée de probabilité.

Un exemple de mise en oeuvre du procédé est donné dans la suite de la description. Dans cet exemple, un circuit comportant une LPUF est considéré. La LPUF comporte $N=2$ chaines de délais, chaque bit de signature étant déduit de la mesure de différence de fréquence $\delta_j$ telle que définie précédemment.

En considérant une population de circuits ayant été fabriqués à l'identique, la variable $\delta_j$ suit une distribution gaussienne de moyenne nulle et de variance $\sigma^2$, c'est-à-dire :

$$\delta_j \in N\left(0, \sigma^2\right) \qquad (6)$$

N(a,b) représentant une loi gaussienne de moyenne a et de variance b.

Au niveau d'un circuit, chaque mesure de $\delta_j$ est sensible à l'environnement. Une valeur mesurée de $\delta_j$ correspondant au j-ième bit de la signature du circuit est notée $\hat{\delta}_j$ suit une distribution gaussienne centrée en $\delta_j$ et de variance $s^2$ correspondant au bruit de mesure, c'est-à-dire :

$$\hat{\delta}_j \in N\left(\delta_j, s^2\right) \qquad (7)$$

La valeur de $\delta_j$ doit être la plus éloignée possible de 0 afin d'obtenir une valeur fiable de la mesure $\hat{\delta}_j$. La probabilité d'erreur sur le bit j notée $P_{e,j}$ correspond, par exemple, à la probabilité que le signe de la valeur mesurée $\hat{\delta}_j$ soit différent du signe de la valeur attendue $\delta_j$. Cette probabilité peut s'exprimer en utilisant l'expression suivante :

$$P_{e,j} = \frac{1}{2}\left(1 - \mathrm{erf}\left(\frac{\delta_j}{s\sqrt{2}}\right)\right) \qquad (8)$$

dans laquelle la fonction erf() est la fonction d'erreur de Gauss.

Un exemple graphique représentant cette erreur est donné figure 7. $P_{e,j}$ correspond à une surface 701 correspondant à l'intégration entre $-\infty$ et 0 de la densité de probabilité de $\hat{\delta}_j$ 700.

Cette probabilité d'erreur $P_{e,j}$ est significative si $\delta_j$ est proche de 0. Elle peut être réduite en pratique en effectuant un nombre T d'essais pendant lesquels les résultats de mesures sont accumulés. Ainsi T mesures $\hat{\delta}_j$ sont réalisées. $P_{e,j}$ peut s'exprimer en utilisant l'expression suivante :

$$P_{e,j} = \frac{1}{2}\left(1 - erf\left(\frac{\sqrt{T} \times \delta_j}{s\sqrt{2}}\right)\right) \qquad (9)$$

Ainsi, si $\delta_j$ est faible et supérieur à une valeur de seuil Th, un nombre significatif T d'essais doit être appliqué si la probabilité d'erreur désirée est faible. En se fixant un seuil de Th, il est ainsi possible d'éliminer les circuits ayant des $\delta_j$ inférieurs à Th, en ayant une certaine probabilité d'erreur et en respectant le nombre d'essais à réaliser. Th peut être avantageusement choisi en tenant compte des conditions défavorables en termes de température et de tension d'alimentation du circuit.

Si on considère un circuit ayant un nombre M d'éléments de retard associés chacun à un bit de signature, il suffit qu'il y ait au moins un bit j tel $\delta_j < Th$ pour le circuit soit rejeté. La probabilité qu'un circuit testé soit rejeté dans cet exemple peut donc être prédite en utilisant l'expression suivante :

$$P_{rej} = 1 - \left[1 - P\left(\left|\delta_i\right| < Th\right)\right]^M \qquad (10)$$

expression dans laquelle :

$$P\left(\left|\delta_i\right| < Th\right) = erf\left(\frac{Th}{\sqrt{2} \times \sigma}\right). \qquad (11)$$

L'exemple ci-dessus correspond à N=2 et des mots de contrôle n'ayant qu'un seul bit j à la valeur 1. La probabilité d'erreur diminue si N>2 ou si les mots de contrôle contiennent plusieurs bits non nuls avec une certaine distance de Hamming HD entre eux, comme exprimé par l'équation (12).

Un bit de signature est ainsi corrélé à HD éléments de retard servant à générer la différence entre deux mesures de fréquences. Il est équivalent de considérer que la mesure consiste en la somme de HD valeurs de $\delta_j$. Il en en découle que :

$$P\left(\left|\delta_i\right| < Th\right) = erf\left(\frac{Th}{\sqrt{2.HD} \times \sigma}\right) \qquad (12)$$

Augmenter la distance de Hamming HD entre les mots de contrôle utilisés permet par conséquent de diminuer la probabilité de rejet des circuits $P_{rej}$.

Le nombre B de bits de signature peut être alors bien supérieur à M. Le taux de réjection dans ce cas est identique à l'expression mais en remplaçant M par le nombre effectif de bits B de la signature :

$$P_{rej} = 1 - \left[1 - erf\left(\frac{Th}{\sigma \times \sqrt{2 \times HD}}\right)\right]^B \qquad (13)$$

Le procédé selon l'invention effectue une série de mesures pouvant aller jusqu'à T essais, puis d'accumuler les résultats $\hat{\delta}_j$ desdites mesures pour chaque bit. Les valeurs obtenues grâce à ces essais sont comparées à une ou plusieurs valeurs de seuil prédéfinies. Le résultat ,de cette comparaison permet de décider si le bit de la signature pour lequel les essais ont été réalisés correspond à un 0, à un 1 ou à une valeur indéterminée quand le seuil n'est pas atteint, auquel cas le bit est considéré comme indéterminé ou non fiable. Une valeur indéterminée est une valeur qui ne permet pas de décider si le bit est à '0' ou à '1'. Cette technique permet de fiabiliser les résultats des mesures utilisés pour la génération des bits de la signature et par conséquent de réduire la probabilité qu'un bit de cette signature soit généré avec une erreur.

Avantageusement, le temps de mesure peut être optimisé si le module de contrôle de la LPUF arrête le calcul pour un bit de signature donné lorsqu'une certaine valeur de seuil est atteinte.

Pour N=2, les mesures correspondent, par exemple, aux différences $\delta_i$ telles que définies précédemment. Ainsi, deux valeurs de seuil peuvent être choisies et comparées aux résultats des mesures cumulées pour chaque bit de la signature, ces deux seuils correspondant par exemple aux valeurs :

- ThxT, pour laquelle un 1 est choisi si une mesure cumulée est supérieure à cette valeur ;
- -Th$\times$T, pour laquelle un 0 est choisi si une mesure cumulée est inférieure à cette valeur.

Lorsque l'accumulation des résultats de mesure correspondant à un bit donné de la signature du circuit atteint l'une de ces valeurs de seuil, les mesures s'arrêtent, et une décision est prise quant à la valeur du bit.

Le principe de mesures successives et de comparaison à un seuil peut être appliqué dans le cadre du procédé de test des circuits, mais aussi par les circuits eux-mêmes, comme explicité précédemment.

Pour un circuit considéré comme fiable à la suite de l'application du procédé de test selon l'invention, il y aura systématiquement convergence. Les bits les plus fiables vont converger rapidement et les moins fiables nécessiteront plus d'essais de mesures.

Lorsque le procédé de test est appliqué à des circuits comportant une LPUF comprenant un bit de parité associé à la signature, le taux de réjection peut être significativement réduit. En effet, la méthode de test ne rejettera pas les circuits ayant un bit de signature non fiable, c'est-à-dire pour lequel $\delta_j$ < Th.

La figure 9 donne un exemple de combinaisons de mot de contrôle et de comparaison des mesures de fréquence leurs étant associées permettant réduire le taux de réjection de circuit comportant une LPUF. Lorsque N > 2, il est possible d'utiliser une mesure indépendante de la température en utilisant des rapports entre différences de fréquences plutôt que des différences entre mesures. Les bits de la signature du circuit sont alors déduits de la valeur de ces rapports. La figure 9 montre les 6 combinaisons possibles de trois mots de contrôle (A,B,C) pour N=3.

Dans ce cas, les bits de signature sont déduits d'une métrique $\Delta_{i,j}$ correspondant, par exemple, à :

$$\Delta_{i,j} = \frac{\delta_i}{\delta_j} \qquad\qquad (14)$$

Dans cette équation, les valeurs $\delta_i$ et $\delta_j$ correspondent aux différences des fréquences mesurées, une différence étant mesurée entre deux combinaisons distinctes de mots de contrôle.

Le module de contrôle de la LPUF détermine alors la métrique $\Delta_{i,j}$ et en déduit un bit de la signature du circuit. L'exemple de la figure 9 donne un exemple dans lequel le premier bit $b_0$ de la signature est positionné à 1 si $\Delta_{1,2}$ > 0, et vaut 0 sinon. De la même manière, le second bit $b_1$ de la signature est positionné à 1 si $\Delta_{3,4}$ > 0 , et vaut 0 sinon.

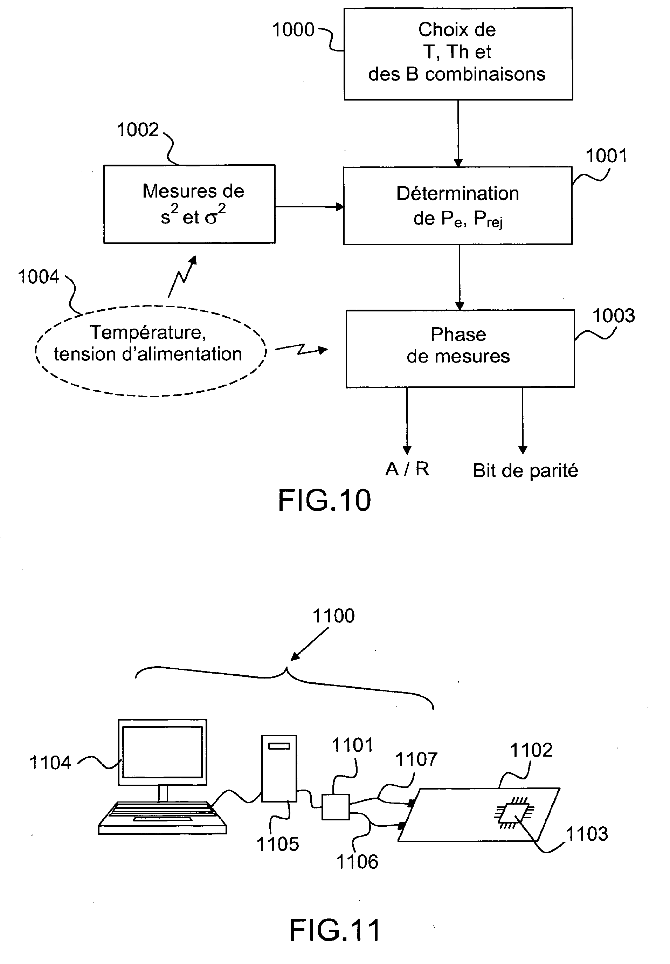

La figure 10 donne un exemple du procédé de test de circuits selon l'invention.

Une première étape du procédé 1000 a pour objectif de sélectionner les paramètres de configuration du test. Ainsi, les valeurs des paramètres T et Th définis précédemment peuvent être sélectionnés, lesdites valeurs influant sur la probabilité de sélectionner ou de rejeter un circuit ainsi que sur la durée du test. Cette étape de configuration permet également de sélectionner B combinaisons de mots de contrôle de manière à garantir une distance de Hamming HD entre deux combinaisons de cet ensemble de B combinaisons.

Une deuxième étape 1001 du procédé a pour objectif la détermination de la probabilité d'erreur par bit ainsi que de la probabilité de réjection des circuits testés. Ces deux probabilités sont déterminées en utilisant, par exemple, les expressions (9) et (13) tout en prenant en compte d'une part les paramètres T et Th tels que choisis lors de l'étape de configuration, et d'autre part des valeurs mesurées 1002 de la variance du bruit de mesure $s^2$ et de la variance des mesures $\sigma^2$ due à la dispersion de traitement. La mesure de ces variances peut être effectuée par tout moyen de mesure connu de l'homme du métier.

La détermination de ces probabilités permet avantageusement d'adapter la valeur des paramètres de configuration en fonction des besoins de l'utilisateur.

Une troisième étape 1003, dite phase de mesure, a pour objectif de déterminer si le circuit testé est considéré fiable. Si ce n'est pas le cas, ledit circuit est rejeté. Cette phase de mesure est appliquée à tous les circuits que l'utilisateur a décidé de tester. Pour cela, le module de contrôle de la LPUF contenue dans le circuit à tester est configuré de manière à appliquer les B combinaisons de mots de contrôle sélectionnées lors de la première étape afin de permettre les mesures des différences de fréquences $\delta_j$. Plusieurs essais de mesures sont effectués pour chaque bit de la signature pour être accumulés et comparés à une ou plusieurs valeurs de seuil telles que décrit précédemment.

Si la LPUF n'a pas à sa disposition de bit de parité, le circuit est rejeté si moins un bit n'est pas considéré fiable.

Dans le cas ou la LPUF a à sa disposition un bit de parité, un circuit testé pour lequel un seul bit de la signature n'est pas considéré fiable ne sera pas rejeté, et une valeur du bit de parité sera calculée sur la signature ainsi générée. Ce bit permettra par la suite audit circuit de détecter une erreur sur un bit non fiable et de la corriger.

Il est à noter que de manière à optimiser la fiabilité de cette méthode de test, les mesures des variances $s^2$ et $\sigma^2$, ainsi que la phase de mesure peuvent être avantageusement conduites dans des conditions correspondant aux conditions extrêmes de fonctionnement des circuits testés. Ces conditions correspondent, par exemple, à une température sensiblement égale à +70°C et à une tension d'alimentation sensiblement inférieure de 5% par rapport à la tension d'alimentation nominale du circuit testé.

La figure 11 donne un exemple de système de test mettant en oeuvre le procédé de test selon l'invention. Le système de test 1100 est composé, par exemple, d'un calculateur 1105 muni d'une interface utilisateur 1104. Le système comprend aussi un équipement 1101 permettant de contrôler des sondes de mesure 1106, 1107. Ces sondes de mesure sont branchées sur une carte électronique 1102 comportant le circuit électronique à tester 1103, ledit circuit comprenant une LPUF. Le système met en oeuvre le procédé de test tel que décrit précédemment. L'interface utilisateur 1104 permet de configurer le test ainsi que d'afficher les résultats.

**Revendications**

1. Circuit intégré en silicium comportant une fonction physiquement non copiable LPUF permettant la génération d'une signature propre audit circuit, ladite fonction étant **caractérisée en ce qu'**elle comporte :

   - un oscillateur en anneau composé d'une boucle (502) parcourue par un signal e, ladite boucle étant formée de N chaînes de délais (500, 501) topologiquement identiques, connectées en série les unes aux autres et d'une porte d'inversion (503), une chaîne de délais (500, 501) étant composée de M éléments de retard (506, 507) connectés en série les uns aux autres ;
   - un module de contrôle (505) générant N mots de contrôle ($C_1$, $C_2$), lesdits mots étant utilisés pour configurer la valeur des retards introduits par les chaines de délais sur le signal e les parcourant ;
   - un module de mesure (504) mesurant la fréquence du signal en sortie de la dernière chaine de délais (501) après la mise à jour des mots de contrôle ;
   - des moyens pour déduire des mesures de fréquence les bits composant la signature du circuit.

2. Circuit selon la revendication 1 **caractérisé en ce que** le circuit est un ASIC ou un FPGA.

3. Circuit selon l'une quelconque des revendications 1 ou 2 **caractérisé en ce que** la signature est utilisée comme clé de chiffrement.

4. Circuit selon l'une quelconque des revendications 1 ou 2 **caractérisé en ce que** la signature est utilisée pour son authentification.

5. Circuit selon l'une quelconque des revendications précédentes **caractérisé en ce que** les éléments de retard comportent des moyens pour aiguiller (400) le signal les parcourant ($e_{i,j}$) selon aux moins deux chemins distincts (403, 404) un chemin introduisant une valeur de retard ($d_{i,j}^0$, $d_{i,j}^1$) lui étant propre, l'aiguillage étant contrôlé par au moins un bit ($C_{i,j}$) appartenant à un mot de contrôle.

6. Circuit selon l'une quelconque des revendications précédentes **caractérisé en ce que** des mots de défi composés d'une concaténation de mots de contrôle sont présentés en entrée du module de contrôle (505), ledit module générant des combinaisons à partir desdits mots afin de configurer les chaines de délais (500, 501).

7. Circuit selon l'une quelconque des revendications précédentes **caractérisé en ce que** les bits de la signature sont déterminés en fonction du classement des fréquences mesurées pour les différentes combinaisons des mots de contrôle.

8. Circuit selon l'une quelconque des revendications 1 à 6 **caractérisé en ce que** les bits de la signature sont déterminés en fonction des différences estimées ($\hat{\delta}_j$) entre deux valeurs de fréquence mesurées, une valeur de fréquence mesurée correspondant à une combinaison de mots de contrôle.

9. Circuit selon l'une quelconque des revendications 1 à 6 **caractérisé en ce que** les bits de la signature sont déterminés en fonction de la valeur du rapport entre deux différences de fréquence estimées ($\delta_j$).

10. Circuit selon l'une quelconque des revendications précédentes **caractérisé en ce qu'**il comporte un générateur de nombres aléatoires, les nombres générés étant utilisés afin de sélectionner l'ordre dans lequel les fréquences correspondant aux combinaisons des mots de contrôles sont mesurées.

11. Circuit selon l'une quelconque des revendications précédentes **caractérisé en ce qu'**il comprend au moins un bit de parité, un tel bit étant utilisé pour corriger un bit de la signature généré avec une erreur.

12. Procédé de test de circuits intégrés comportant une fonction physiquement non copiable LPUF selon l'une quelconque des revendications 1 à 11 **caractérisé en ce qu'**une succession d'étapes est appliquée aux circuits testés de manière à sélectionner les circuits permettant de générer une signature propre audit circuit avec un niveau de fiabilité choisi, ces étapes correspondant à :

- une sélection des paramètres T et Th (1000) de configuration du test ainsi que de B combinaisons de mots de contrôle ayant une distance de Hamming au moins égale à une valeur prédéfinie HD ;
- une phase de mesures (1003) durant laquelle des quantités représentatives $(\hat{\delta}_j)$ des bits de signature du circuit sont mesurées, jusqu'à T mesures étant effectuées par bit de signature, ces T mesures étant accumulées de manière à décider si le bit correspondant est indéterminé, la décision étant prise après comparaison avec au moins une valeur déduite de la valeur du paramètre Th, les circuits testés étant sélectionnés en fonction du nombre de bits indéterminés détectés.

13. Procédé selon la revendication 12 **caractérisé en ce qu'**il comporte une étape de détermination de la probabilité pour qu'un circuit ne soit pas sélectionné, ladite probabilité étant déterminée en utilisant l'expression :

$$P_{rej} = 1 - \left[1 - erf\left(\frac{Th}{\sigma \times \sqrt{2 \times HD}}\right)\right]^B$$

dans laquelle :

erf() est la fonction d'erreur de Gauss ;
$\sigma$ est la variance des mesures des quantités représentatives des bits de signature du circuit.

14. Procédé selon l'un quelconque des revendications 12 ou 13 **caractérisé en ce qu'**il comporte une étape de détermination de la probabilité d'erreur par bit de signature, ladite probabilité étant déterminée en utilisant l'expression :

$$P_{e,j} = \frac{1}{2}\left(1 - erf\left(\frac{\sqrt{T} \times \delta_j}{s\sqrt{2}}\right)\right)$$

dans laquelle :

$\delta_j$ est une différence de fréquence mesurée entre deux fréquences correspondant à l'application de deux combinaisons de mots de contrôle distinctes ;
s est définie telle que $s^2$ est la variance du bruit de mesure.

15. Procédé selon l'une quelconque des revendications 12 à 14 **caractérisé en ce qu'**un circuit est sélectionné si aucun bit de la signature est indéterminé.

16. Procédé selon l'une quelconque des revendications 12 à 14 **caractérisé en ce que** lorsque la fonction LPUF d'un circuit testé est associée à un bit de parité dont la valeur est déterminée à partir de la signature dudit circuit, ledit circuit est sélectionné si le nombre de bit indéterminé est strictement inférieur à 2.

17. Procédé selon l'une quelconque des revendications 12 à 16 **caractérisé en ce que** les valeurs de $s^2$ et de $\sigma^2$ sont mesurées (1002) pour une température sensiblement égale à +70°C et une tension d'alimentation des circuits sensiblement inférieure de 5% par rapport à la tension d'alimentation nominale, la phase de mesures (1003) étant conduite dans les mêmes conditions.

18. Système de test mettant en oeuvre le procédé selon l'une quelconque des revendications 13 à 17 **caractérisé en ce qu'**il est composé d'un calculateur (1105) muni d'une interface utilisateur (1104), d'un équipement (1101) permettant de contrôler des sondes de mesure (1106, 1107), lesdites sondes ayant pour fonction de collecter les mesures des quantités représentatives $(\hat{\delta}_j)$ des bits de signature produites par les circuits testés (1103), les traitements associés à cette phase étant ensuite effectués par le calculateur (1105) et affichés sur son interface (1104).

**Patentansprüche**

1. Integrierte Siliciumschaltung, die eine physikalische nicht reproduzierbare LPUF-Funktion umfasst, die die Erzeugung einer der Schaltung eigenen Signatur zulässt, wobei die Funktion **dadurch gekennzeichnet ist, dass** sie Folgendes umfasst:

   einen Ringoszillator bestehend aus einer Schleife (502), die von einem Signal e durchflossen wird, wobei die Schleife von N in Serie miteinander geschalteten topologisch identischen Timing-Ketten (500, 501) und einem Inversionsport (503) gebildet wird, wobei eine Timing-Kette (500, 501) von M Verzögerungselementen (506, 507) zusammengesetzt ist, die in Serie miteinander geschaltet sind;
   ein Steuermodul (505), das N Steuerwörter ($C_1$, $C_2$) erzeugt, wobei die Steuerwörter zum Konfigurieren des Wertes der von den Timing-Ketten eingeführten Verzögerungen auf das Signal e benutzt wird, das durch sie fließt;
   ein Messmodul (504) zum Messen der Frequenz des Signals am Ausgang der letzten Timing-Kette (501) nach dem Aktualisieren der Steuerwörter;
   Mittel zum Ableiten der die Signatur der Schaltung bildenden Bits von den Frequenzmesswerten.

2. Schaltung nach Anspruch 1, **dadurch gekennzeichnet, dass** die Schaltung eine ASIC- oder eine FPGA-Schaltung ist.

3. Schaltung nach Anspruch 1 oder 2, **dadurch gekennzeichnet, dass** die Signatur als kryptografischer Schlüssel benutzt wird.

4. Schaltung nach Anspruch 1 oder 2, **dadurch gekennzeichnet, dass** die Signatur für ihre Authentifikation benutzt wird.

5. Schaltung nach einem der vorherigen Ansprüche, **dadurch gekennzeichnet, dass** die Verzögerungselemente Mittel zum Leiten (400) des sie durchfließenden ($e_{i,j}$) Signals über wenigstens zwei getrennte Wege (403, 404) umfassen, wobei ein Weg einen ihm eigenen Verzögerungswert ($d_{i,j}^0$, $d_{i,j}^1$) einführt, wobei das Leiten von wenigstens einem zu einem Steuerwort gehörenden Bit ($C_{i,j}$) gesteuert wird.

6. Schaltung nach einem der vorherigen Ansprüche, **dadurch gekennzeichnet, dass** Challenge-Wörter bestehend aus einer Verkettung von Steuerwörtern am Eingang des Steuermoduls (505) präsentiert werden, wobei das Modul Kombinationen von den Wörtern erzeugt, um die Verzögerungsketten (500, 501) zu konfigurieren.

7. Schaltung nach einem der vorherigen Ansprüche, **dadurch gekennzeichnet, dass** die Bits der Signatur in Abhängigkeit von der Klassierung von gemessenen Frequenzen für die verschiedenen Kombinationen von Steuerwörtern ermittelt werden.

8. Schaltung nach einem der Ansprüche 1 bis 6, **dadurch gekennzeichnet, dass** die Bits der Signatur in Abhängigkeit von geschätzten Differenzen ($\delta_j$) zwischen zwei gemessenen Frequenzwerten ermittelt werden, wobei ein gemessener Frequenzwert einer Kombination von Steuerwörtern entspricht.

9. Schaltung nach einem der Ansprüche 1 bis 6, **dadurch gekennzeichnet, dass** die Bits der Signatur in Abhängigkeit vom Wert des Verhältnisses zwischen zwei geschätzten Frequenzdifferenzen ($\delta_j$) ermittelt werden.

10. Schaltung nach einem der vorherigen Ansprüche, **dadurch gekennzeichnet, dass** sie einen Zufallszahlengenerator umfasst, wobei die erzeugten Zahlen zum Auswählen der Reihenfolge benutzt werden, in der die den Kombinationen von Steuerwörtern entsprechenden Frequenzen gemessen werden.

11. Schaltung nach einem der vorherigen Ansprüche, **dadurch gekennzeichnet, dass** sie wenigstens ein Paritätsbit umfasst, wobei ein solches Bit zum Korrigieren eines Bits der mit einem Fehler erzeugten Signatur benutzt wird.

12. Verfahren zum Testen von integrierten Schaltungen mit einer physikalisch nicht reproduzierbaren LPUF-Funktion nach einem der Ansprüche 1 bis 11, **dadurch gekennzeichnet, dass** eine Folge von Schritten auf die getesteten Schaltungen angewandt wird, um die Schaltungen auszuwählen, mit denen eine der Schaltung eigene Signatur erzeugt werden kann, mit einem gewählten Zuverlässigkeitsniveau, wobei diese Schritte Folgendem entsprechen:

Auswählen der Konfigurationsparameter T und Th (1000) des Tests sowie von B Kombinationen von Steuerwörtern mit einer Hamming-Distanz von wenigstens gleich einem vordefinierten Wert HD;
einer Messphase (1003), in der die repräsentativen Mengen ($\delta_j$) von Signaturbits der Schaltung gemessen werden, bis T Messungen pro Signaturbit durchgeführt wurden, wobei diese T Messungen so akkumuliert werden, dass entschieden werden kann, ob das entsprechende Bit unbestimmt ist, wobei die Entscheidung nach einem Vergleich mit wenigstens einem vom Wert des Parameters Th abgeleiteten Wert gefällt wird, wobei die getesteten Schaltungen in Abhängigkeit von der Zahl der erkannten unbestimmten Bits ausgewählt werden.

**13.** Verfahren nach Anspruch 12, **dadurch gekennzeichnet, dass** es einen Schritt des Bestimmens der Wahrscheinlichkeit beinhaltet, dass eine Schaltung nicht ausgewählt wird, wobei die Wahrscheinlichkeit unter Nutzung des folgenden Ausdrucks bestimmt wird:

$$P_{rej} = 1 - \left[1 - erf\left(\frac{Th}{\sigma \times \sqrt{2 \times HD}}\right)\right]^{B}$$

wobei:

erf() die Gaußsche Fehlerfunktion ist;
$\sigma$ die Varianz der Messungen der für die Signaturbits der Schaltung repräsentativen Mengen ist.

**14.** Verfahren nach Anspruch 12 oder 13, **dadurch gekennzeichnet, dass** es einen Schritt des Ermittelns der Fehlerwahrscheinlichkeit pro Signaturbit umfasst, wobei die Wahrscheinlichkeit unter Nutzung des folgenden Ausdrucks bestimmt wird:

$$P_{e,j} = \frac{1}{2}\left(1 - erf\left(\frac{\sqrt{T} \times \delta_j}{s\sqrt{2}}\right)\right)$$

wobei:

$\delta_j$ eine gemessene Frequenzdifferenz zwischen zwei Frequenzen entsprechend der Anwendung von zwei Kombinationen von getrennten Steuerwörtern ist;
s so definiert ist, dass $s^2$ die Varianz des Messrauschens ist.

**15.** Verfahren nach einem der Ansprüche 12 bis 14, **dadurch gekennzeichnet, dass** eine Schaltung ausgewählt wird, wenn kein Bit der Signatur unbestimmt ist.

**16.** Verfahren nach einem der Ansprüche 12 bis 14, **dadurch gekennzeichnet, dass**, wenn die LPUF-Funktion einer getesteten Schaltung mit einem Paritätsbit assoziiert ist, dessen Wert auf der Basis der Signatur der Schaltung ermittelt wird, die Schaltung ausgewählt wird, wenn die Zahl des unbestimmten Bits streng kleiner als 2 ist.

**17.** Verfahren nach einem der Ansprüche 12 bis 16, **dadurch gekennzeichnet, dass** die Werte von $s^2$ und von $\sigma^2$ für eine Temperatur von im Wesentlichen gleich +70°C und eine Versorgungsspannung von Schaltungen im Wesentlichen kleiner als 5 % in Bezug auf die Nennversorgungsspannung gemessen (1002) wird, wobei die Messphase (1003) unter denselben Bedingungen durchgeführt wird.

**18.** System zum Testen unter Ausführung des Verfahrens nach einem der Ansprüche 13 bis 17, **dadurch gekennzeichnet, dass** es Folgendes umfasst: einen Rechner (1105), der mit einer Benutzeroberfläche (1104) ausgestattet ist, ein Gerät (1101), mit dem Messsonden (1106, 1107) gesteuert werden können, wobei die Sonden die Funktion des Sammelns der Messwerte von repräsentativen Quantitäten ($\delta_j$) von Signaturbits dienen, die von den getesteten Schaltungen (1103) produziert werden, wobei die mit dieser Phase assoziierten Verarbeitungen dann von dem Rechner (1105) durchgeführt und an seiner Schnittstelle (1104) angezeigt werden.

**Claims**

1. Integrated circuit of silicon comprising a physically non-copyable function LPUF which allows the generation of a signature which is specific to the circuit, the function being **characterised in that** it comprises:

   an annular oscillator which is composed of a loop (502) through which a signal e passes, the loop being formed by N delay chains (500, 501) which are topologically identical and which are connected in series to each other and an inversion gate (503), a delay chain (500, 501) being composed of M delay elements (506, 507) which are connected in series to each other;
   a control module (505) which generates N control words ($C_1$, $C_2$), the words being used to configure the value of the delays introduced by the delay chains to the signal e which passes through them,
   a measurement module (504) which measures the frequency of the signal leaving the last delay chain (501) after the control words have been updated;
   means for deriving from the frequency measurements the bits from which the signature of the circuit is composed.

2. Circuit according to claim 1, **characterised in that** the circuit is an ASIC or an FGPA.

3. Circuit according to either claim 1 or claim 2, **characterised in that** the signature is used as an encryption key.

4. Circuit according to either claim 1 or claim 2, **characterised in that** the signature is used for the authentication thereof.

5. Circuit according to any one of the preceding claims, **characterised in that** the delay elements comprise means (400) for routing the signal ($e_{i,j}$) which passes through them along at least two separate paths (403, 404), a path introducing a delay value ($d_{i,j}^0$, $d_{i,j}^1$) which is specific to it, the routing being controlled by at least one bit ($C_{i,j}$) which belongs to a control word.

6. Circuit according to any one of the preceding claims, **characterised in that** challenge words which are composed of a concatenation of control words are set out at the input of the control module (505), the module generating combinations from these words in order to configure the delay chains (500, 501).

7. Circuit according to any one of the preceding claims, **characterised in that** the bits of the signature are determined in accordance with the classification of the frequencies measured for the different combinations of the control words.

8. Circuit according to any one of claims 1 to 6, **characterised in that** the bits of the signature are determined in accordance with the estimated differences ($\delta_j$) between two measured frequency values, a measured frequency value corresponding to a combination of control words.

9. Circuit according to any one of claims 1 to 6, **characterised in that** the bits of the signature are determined in accordance with the value of the relationship between two estimated frequency differences ($\delta_j$).

10. Circuit according to any one of the preceding claims, **characterised in that** it comprises a random number generator, the numbers generated being used in order to select the order in which the frequencies corresponding to the combinations of the control words are measured.

11. Circuit according to any one of the preceding claims, **characterised in that** it comprises at least one parity bit, such a bit being used to correct a bit of the signature generated with an error.

12. Method for testing integrated circuits, comprising a physically non-copyable function LPUF according to any one of claims 1 to 11, **characterised in that** a succession of steps is applied to the tested circuits in order to select the circuits which allow generation of a signature which is specific to the circuit with a selected level of reliability, these steps corresponding to:

   a selection of parameters T and Th (1000) for configuration of the test and B combinations of control words which have a Hamming distance which is at least equal to a predefined value HD;
   a measurement phase (1003) during which quantities ($\delta_j$) which are representative of the signature bits of the circuit are measured, up to T measurements being carried out per signature bit, these T measurements being accumulated so as to decide whether the corresponding bit is indeterminate, the decision being taken after comparison with at least one value derived from the value of the parameter Th, the tested circuits being selected

16

in accordance with the number of indeterminate bits detected.

13. Method according to claim 12, **characterised in that** it comprises a step of determining the probability so that a circuit is not selected, the probability being determined using the expression:

$$P_{rej} = 1 - \left[ 1 - erf\left( \frac{Th}{\sigma \times \sqrt{2 \times HD}} \right) \right]^{B}$$

in which:

erf() is the Gaussian error function;
$\sigma$ is the variance of the measurements of the quantities which are representative of the signature bits of the circuit.

14. Method according to either claim 12 or claim 13, **characterised in that** it comprises a step of determining the error probability per signature bit, the probability being determined using the expression:

$$P_{e,j} = \frac{1}{2}\left( 1 - erf\left( \frac{\sqrt{T} \times \delta_j}{s\sqrt{2}} \right) \right)$$

in which:

$\delta_j$ is a frequency difference measured between two frequencies corresponding to the application of two combinations of separate control words;
s is defined such that $s^2$ is the variance of the measurement noise.

15. Method according to any one of claims 12 to 14, **characterised in that** a circuit is selected if no bit of the signature is indeterminate.

16. Method according to any one of claims 12 to 14, **characterised in that**, when the LPUF function of a tested circuit is associated with a parity bit whose value is determined from the signature of the circuit, the circuit is selected if the indeterminate bit number is strictly less than 2.

17. Method according to any one of claims 12 to 16, **characterised in that** the values of $s^2$ and $\sigma^2$ are measured (1002) for a temperature which is substantially equal to +70°C and a supply voltage for the circuits which is substantially less than 5% with respect to the nominal supply voltage, the measurement phase (1003) being carried out under the same conditions.

18. Test system implementing the method according to any one of claims 13 to 17, **characterised in that** it is composed of a processor (1105) which is provided with a user interface (1104), an item of equipment (1101) which allows measurement probes (1106, 1107) to be controlled, the probes having the function of collecting the measurements of quantities ($\delta_j$) which are representative of the signature bits produced by the tested circuits (1103), the processes associated with this phase then being carried out by the processor (1105) and displayed on the interface (1104) thereof.

FIG.1

FIG.2

FIG.3

FIG.4

FIG.5

FIG.6

FIG.7

FIG.8

FIG.9

1000 ⌐ Choix de
T, Th et
des B combinaisons

1002

Mesures de
$s^2$ et $\sigma^2$

1001

Détermination
de $P_e$, $P_{rej}$

1004

Température,
tension d'alimentation

1003

Phase
de mesures

A / R          Bit de parité

## FIG.10

1100

1104

1101    1107    1102

1105    1106    1103

## FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. PAPPU.** *Physical One-Way Functions, PhD Thesis,* Mars 2001
- **P. TUYLS ; B. SKORIC ; T. KEVENAAR.** Security with Noisy Data: Private Biometrics, Secure Key Storage and Anti-Counterfeiting, Secaucus. Springer-Verlag, 2007
- **B. GASSEND ; D. E. CLARKE ; M. VAN DIJK ; S. DEVADAS.** Silicon physical random functions. ACM Conference on Computer and Communications Security, 2002, 148-160
- **G. E. SUH ; S. DEVADAS.** Physical unclonable functions for device authentication and secret key generation. *DAC,* 2007, 9-14